# EUROPÄISCHE PATENTSCHRIFT

(11) **EP 2 991 817 B1**
(45) Veröffentlichungstag und Bekanntmachung des Hinweises auf die Patenterteilung: **14.02.2018**
(21) Anmeldenummer: 14731225.0
(22) Anmeldetag: 16.06.2014
(51) Int. Cl.: B29C 67/00

(54) **ANPASSUNGSVERFAHREN UND HERSTELLVERFAHREN FÜR MITTELS SLM GEFERTIGTE BAUTEILE**
ADAPTATION METHOD AND PRODUCTION METHOD FOR COMPONENTS PRODUCED BY MEANS OF SLM
PROCÉDÉ D'ADAPTATION ET PROCÉDÉ DE FABRICATION POUR DES COMPOSANTS FABRIQUÉS PAR SLM

(30) Priorität: 09.07.2013 EP 13175680
(43) Veröffentlichungstag der Anmeldung: 09.03.2016
(73) Patentinhaber: Siemens Aktiengesellschaft, 80333 München (DE)
(72) Erfinder: DEISS, Olga, 40627 Düsseldorf (DE); REINARZ, Bernd, 45478 Mülheim an der Ruhr (DE); VAN KAMPEN, Jaap, NL-6042 AR Roermond (NL)
(86) Internationale Anmeldenummer: PCT/EP2014/062515
(87) Internationale Veröffentlichungsnummer: WO 2015/003876

(56) Entgegenhaltungen:
- EP-A2- 2 186 625
- WO-A1-2005/080029
- DE-A1-102011 113 445
- US-A1- 2009 072 447

## Beschreibung

Die vorliegende Erfindung betrifft ein Anpassungsverfahren für ein Modellierverfahren, in welchem anhand einer Zielgeometrie eine Modellgeometrie für ein durch ein Selektives-Laser-Schmelzverfahren zu erzeugendes Objekt erstellt wird sowie ein Herstellverfahren, in welches das Anpassungsverfahren integriert ist.
Selektive-Laser-Schmelzverfahren (kurz SLM, für Selective Laser Melting) sind bekannt. In einem Selektiven-Laser-Schmelzverfahren wird pulverförmiger Werkstoff verwendet, aus dem mittels eines Lasers schichtweise ein Objekt erzeugt wird.
Beim Selektiven-Laser-Schmelzverfahren können Überhänge, Treppeneffekte und Pulveranhaftungen auftreten, die insbesondere bei Bauteilen mit einer sehr hohen Anforderung an die Maßgenauigkeit, insbesondere Gasturbinenkomponenten mit Strömungskanälen, Nacharbeiten verlangen und somit zusätzlichen Aufwands erfordern. Die WO2005/080029 offenbart ein Anpassungsverfahren für eine Modellierverfahren. Der vorliegenden Erfindung liegt die Aufgabe zugrunde, diese Nachteile zu beheben und dazu ein Anpassungsverfahren und ein Herstellungsverfahren bereitzustellen.
Gelöst wird diese Aufgabe mit einem Anpassungsverfahren nach Anspruch 1 und einem Herstellverfahren nach Anspruch 5. Vorteilhafte Weiterbildungen der Erfindung sind in den Unteransprüchen angegeben und in der Beschreibung beschrieben.
In dem erfindungsgemäßen Anpassungsverfahren für ein Modellierverfahren, in dem anhand einer Zielgeometrie eine von der Zielgeometrie abgeleitete Modellgeometrie für ein durch ein Selektives-Laser-Schmelzverfahren zu erzeugendes Objekt erstellt wird, wird aus der abgeleiteten Modellgeometrie durch eine Dimensionsanpassung mittels eines Korrekturfaktors und/oder durch eine Geometrieanpassung mittels einer Korrekturgeometrie eine angepasste Modellgeometrie erzeugt wobei aus einer Bohrung mit kreisförmigem Querschnitt als Zielgeometrie eine Bohrung mit tropfenförmigem Querschnitt als angepasste Modellgeometrie erzeugt wird. Mit dem erfindungsgemäßen Anpassungsverfahren können vorteilhaft Überhänge, Anlagerungen und Treppeneffekte des Selektiven-Laser-Schmelzverfahrens ausgeglichen werden. Nacharbeiten können entfallen. Insbesondere Strömungskanäle können in Gasturbinenkomponenten an Stellen erzeugt werden, die für eine Nacharbeit nicht zugänglich sind und durch das erfindungsgemäße Anpassungsverfahren trotzdem alle Anforderungen erfüllen. Zusätzliche Designmöglichkeiten sind somit geschaffen.
In einer vorteilhaften Ausführung des erfindungsgemäßen Anpassungsverfahrens wird die Dimensionsanpassung und/oder die Geometrieanpassung in Abhängigkeit von der Orientierung der Zielgeometrie im Raum vorgenommen.
Eine Berücksichtigung der Orientierung der Zielgeometrie verbessert das Ergebnis des erfindungsgemäßen Anpassungsverfahrens. Beispielsweise entstehen Überhänge verstärkt in Richtung der Schwerkraft in einem senkrecht zur Aufbaurichtung verlaufendem Hohlraum (Kanal). Diesem und anderen orientierungsabhängigen Erscheinungen kann somit besser entgegengewirkt werden. In Abhängigkeit der Orientierung der Zielgeometrie können somit verschiedene Korrekturfaktoren und/oder Korrekturgeometrien vorgegeben werden. Das Anwendungsspektrum des erfindungsgemäßen Anpassungsverfahrens wird vergrößert und seine Leistungsfähigkeit verstärkt.
In einer weiteren vorteilhaften Ausführung des erfindungsgemäßen Anpassungsverfahrens wird die Dimensionsanpassung und/oder die Geometrieanpassung in Abhängigkeit von der Dimension der Zielgeometrie vorgenommen.
So sind bei kleineren Dimensionen die Anpassungen verhältnismäßig groß gegenüber Anpassungen bei größeren Dimensionen. In Abhängigkeit der Dimension der Zielgeometrie können somit Korrekturfaktoren verschiedener Größe und/oder verschiedene Korrekturgeometrien vorgegeben werden. Auch mit dieser Maßnahme wird das Anwendungsspektrum des erfindungsgemäßen Anpassungsverfahrens vergrößert und seine Leistungsfähigkeit verstärkt.
In einer weiteren vorteilhaften Ausführung des erfindungsgemäßen Anpassungsverfahrens wird die Dimensionsanpassung und/oder die Geometrieanpassung in Abhängigkeit von der Gestalt der Zielgeometrie vorgenommen.
So sind die Anpassungen bei starken Formänderungen verhältnismäßig groß gegenüber Anpassungen bei kleinen Formänderungen. In Abhängigkeit der Formvielfalt der Zielgeometrie können somit verschiedene Korrekturfaktoren und/oder Korrekturgeometrien vorgegeben werden.

In dem erfindungsgemässen Anpassungverfahren wird aus einer Bohrung mit kreisförmigem Querschnitt als Zielgeometrie eine Bohrung mit tropfenförmigem Querschnitt als angepasste Modellgeometrie erzeugt.
Insbesondere bei Bohrungen werden hohe Ansprüche an die Maßgenauigkeit gestellt, da mit einer Abweichung des Durchmessers vom Soll-Durchmesser Durchflussmengen eines durch die Bohrung strömenden Mediums stark von der Vorgabe abweichen können. Das erfindungsgemäß Anpassungsverfahren löst auch diese spezielle Anforderung.
Das erfindungsgemäße Anpassungsverfahren ist in allen Ausführungsvarianten bevorzugt in ein erfindungsgemäßes Herstellverfahren integriert. In dem erfindungsgemäßen Herstellverfahren wird anhand einer Zielgeometrie in einem Modellierverfahren eine von der Zielgeometrie abgeleitete Modellgeometrie erzeugt. Anschließend wird in dem erfindungsgemäßen Anpassungsverfahren aus der abgeleiteten Modellgeometrie eine angepasste Modellgeometrie erzeugt. Aus der angepassten Modellgeometrie wird anschließend in einem Selektiven-Laser-Schmelzverfahren ein angepasstes Objekt erzeugt.

Damit ist ein Herstellungsverfahren bereitgestellt, mit dem vorteilhaft maßgenaue Formteile erzeugt werden können, ohne dass zusätzliche Nacharbeiten notwendig sind. Das erfindungsgemäße Herstellungsverfahren ist damit kostengünstiger als herkömmliche Verfahren. Zudem ist es möglich Formteile mit Hinterschnitten oder auch innenliegenden Strömungskanälen mit engen Fertigungstoleranzen zu erzeugen, was insbesondere beim Bau von Gasturbinenkomponenten relevant ist. So wird in einer vorteilhaften Ausführung des erfindungsgemäßen Herstellverfahrens als Objekt eine einen Strömungskanal aufweisende Gasturbinenkomponente hergestellt. Der Strömungskanal kann insbesondere ein Brennstoffkanal oder ein Kühlluftkanalsein

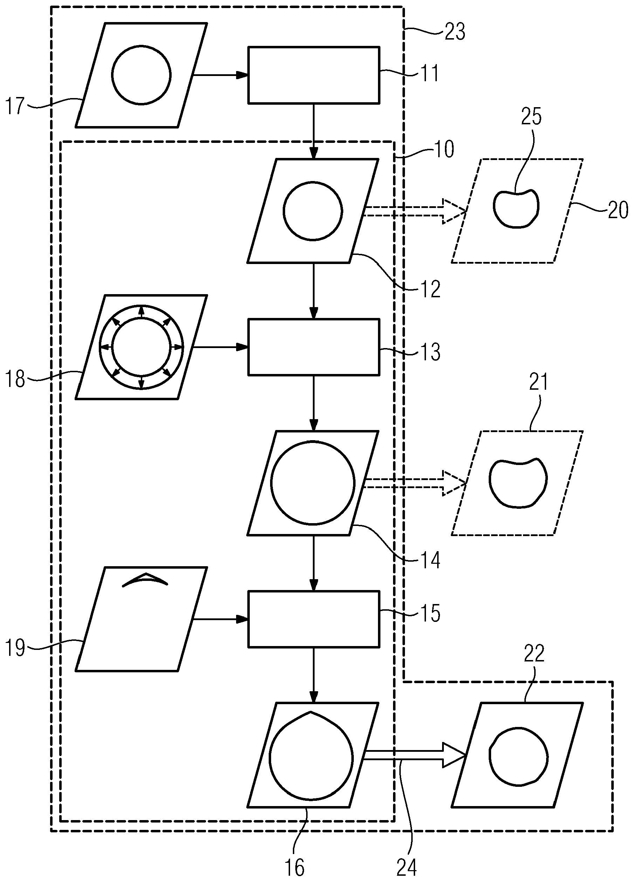

Ausführungsbeispiele der Erfindung werden anhand der Zeichnung und der nachfolgenden Beschreibung näher erläutert. Die Figur zeigt ein erfindungsgemäßes Herstellverfahren mit einem integrierten erfindungsgemäßen Anpassungsverfahren.

In der Figur ist in einem Diagramm ein erfindungsgemäßes Anpassungsverfahren 10 in einer beispielhaften Ausführung gezeigt. Das Anpassungsverfahren 10 ist hier in ein erfindungsgemäßes Herstellverfahren 23 integriert.

In dem erfindungsgemäßen Herstellverfahren 23 wird in einem Selektiven-Laser-Schmelzverfahren 24 ein hier als angepasstes Objekt 22 bezeichnetes Formteil erzeugt. Das Selektive-Laser-Schmelzverfahren 24 entspricht hierbei dem Stand der Technik. Das Selektive-Laser-Schmelzverfahren 24 ist computergesteuert und benötigt für die Erzeugung eines Objekts eine Modellgeometrie 12, 14, 16 in Form eines Datensatzes.

In dem erfindungsgemäßen Herstellverfahren 23 wird aus einer Zielgeometrie 17 in einem Modellierverfahren 11 eine abgeleitete Modellgeometrie 12 erzeugt. Das Modellierverfahren 11 entspricht dabei dem Stand der Technik. In der Figur ist als Zielgeometrie 17 eine Bohrung mit einem kreisrunden Querschnitt gezeigt.
In dem erfindungsgemäßen Herstellverfahren wird die abgeleitete Modellgeometrie 12 vor dem Selektiven-Laser-Schmelzverfahren 24 angepasst. Diese Anpassung findet in dem erfindungsgemäßen Anpassungsverfahren 10 statt. Das Anpassungsverfahren 10 findet insbesondere zum Zeitpunkt der konstruktiven Auslegung mittels CAD (Computer Aided Design) statt.
In dem erfindungsgemäßen Anpassungsverfahren wird aus der abgeleiteten Modellgeometrie 12 eine angepasste Modellgeometrie 16 dadurch erzeugt, dass eine Dimensionsanpassung 13 oder eine Geometrieanpassung 15 oder eine Dimensionsanpassung 13 und eine Geometrieanpassung 15 durchgeführt werden. In der gezeigten Variante wird beispielhaft zunächst eine Dimensionsanpassung 13 und anschließend eine Geometrieanpassung 15 durchgeführt. Erfindungsgemäß können die Anpassungen 13, 15 auch in umgekehrter Reihenfolge stattfinden. Erfindungsgemäß wird zumindest eine der Anpassungen 13, 15 durchgeführt. Erfindungsgemäß wird die Modellgeometrie als angepasste Modellgeometrie 16 bezeichnet, welche in dem Selektiven-Laser-Schmelzverfahren 24 verwendet wird. Als teilangepasste Modellgeometrie 14 wird erfindungsgemäß die Modellgeometrie bezeichnet, die anschließend eine weitere Anpassung 13, 15 erfährt. In der Figur ist zur Veranschaulichung eine teilangepasste Modellgeometrie 14 als Resultat der Dimensionsanpassung 13 dargestellt.
In der Figur sind zur Veranschaulichung zudem die Resultierenden Objekte 20, 21 in gestrichelten Symbolen gezeigt, die aus den jeweiligen Modellgeometrien 12, 14 im Selektiven-Laser-Schmelzverfahren 24 entstehen würden. Ohne das Anpassungsverfahren 10 würde aus der abgeleiteten Modellgeometrie 12 in dem Selektiven-Laser-Schmelzverfahren 24 ein hier als ursprüngliches Objekt 20 bezeichnetes Formteil erzeugt werden. Das ursprüngliche Objekt 20 ist in der Figur entsprechend der Zielgeometrie 17 ebenfalls eine Bohrung. Das ursprüngliche Objekt 20 weist als Bohrung einen kleineren Durchmesser als die Zielgeometrie 17 und eine von der Zielgeometrie 17 abweichende Form auf. Das ursprüngliche Objekt 20 weist einen Überhang an seiner oberen Konturkante auf.

Bei der Dimensionsanpassung 13 wird die abgeleitete Modellgeometrie 12 beziehungsweise die teilangepasste Modellgeometrie 14 erfindungsgemäß um einen Korrekturfaktor 18 angepasst. Beim Selektiven-Laser-Schmelzverfahren 24 kann es zu Anhaftungen kommen, die den Durchmesser von Hohlräumen verkleinern. Durch eine Vergrößerung der Dimension um den Korrekturfaktor 18 kann diese Verkleinerung des Hohlraums ausgeglichen werden. Der Korrekturfaktor 18 wird dabei vorgegeben. Der Korrekturfaktor 18 stellt eine prozentuale Vergrößerung von Polygonzügen dar, mit denen die Zielgeometrie 17 im Modell beschrieben ist.

In der gezeigten Ausführung wird die abgeleitete Modellgeometrie 12 mit der Dimensionsanpassung 13 in ihrer Dimension verändert. Relationen in der Geometrie bleiben unbeeinflusst. Die Form bleibt im Wesentlichen die Selbe. Insbesondere wenn die abgeleitete Modellgeometrie 12 eine Bohrung ist, wird die abgeleitete Modellgeometrie 12 vergrößert.

In der Figur ist als Ergebnis der Dimensionsanpassung 13 die teilangepasste Modellgeometrie 14 gezeigt. Die teilangepasste Modellgeometrie 14 weist als Bohrung einen größeren Durchmesser auf, als in die abgeleitete Modellgeometrie 12. Bei einer Verwendung dieser Daten der teilangepassten Geometrie 14 in dem Selektiven-Laser-Schmelzverfahren 24 würde nun ein hier als teilangepasstes Objekt 21 bezeichnetes Formteil erzeugt werden. Das teilangepasste Objekt 21 ist hier eine Bohrung, die nun den gleichen Durchmesser wie die Zielgeometrie 17 aufweist.

Bei der Geometrieanpassung 15 wird die abgeleitete Modellgeometrie 12 beziehungsweise die teilangepasste Modellgeometrie 14 erfindungsgemäß um eine Korrekturgeometrie 19 angepasst. Beim Selektiven-Laser-Schmelzverfahren 24 kann es zu ungewünschten Überhängen 25 kommen, wodurch die Gestalt des erzeugten Formteils von der Gestalt der Zielgeometrie 17 abweicht. Durch eine Veränderung der Form der Modelgeometrie durch Ergänzung mit der Korrekturgeometrie 19 kann ein derartiger Überhang ausgeglichen werden. Die Korrekturgeometrie 19 wird dabei vorgegeben.

In der gezeigten Ausführung wird die teilangepasste Modellgeometrie 14 mit der Geometrieanpassung 15 in ihrer Form verändert. Relationen in der Geometrie werden verändert. Die Dimension der Geometrie bleibt im Wesentlichen unverändert. Insbesondere wenn die teilangepasste Modellgeometrie 14 eine Bohrung mit kreisrundem Querschnitt ist, wird die abgeleitete Modellgeometrie 12 in der Weise verändert, dass die angepasste Modellgeometrie 16 eine Bohrung mit einem tropfenförmigen Querschnitt ist. Die Korrekturgeometrie 19 ist in diesem Beispiel im Wesentlichen ein Dreieck, um welches die kreisrunde Bohrung im oberen Bereich ergänzt wird. Erfindungsgemäß sind auch weitere Korrekturgeometrien 19 denkbar, beispielsweise auch treppenförmige Vielecke. Mit der Geometrieanpassung 15 wird einem Einfallen eines kritischen Übergangsbereichs - wodurch Überhänge entstehen- entgegengewirkt. Die Korrekturgeometrie 19 weist insbesondere eine Gestalt auf, die im Wesentlichen einer an der Konturkante gespiegelten Gestalt des Überhangs 25 des ursprünglichen Objekts 20 entspricht.

In der Figur ist als Ergebnis der Geometriesanpassung 15 die angepasste Modellgeometrie 16 gezeigt. In der angepassten Modellgeometrie 16 weist die Bohrung nun einen tropfenförmigen Querschnitt auf. Bei der Verwendung der Daten der angepassten Geometrie 16 in dem Selektiven-Laser-Schmelzverfahren 24 entsteht das angepasste Objekt 22. Das angepasste Objekt 22 ist hier eine Bohrung, die im Wesentlichen die gleiche Form wie die Zielgeometrie 17 aufweist.

Der Korrekturfaktor 18 und die Korrekturgeometrie 19 sind variabel und können beispielsweise aus einer hinterlegten Tabelle entnommen werden. Dadurch können verschiedene Parameter, wie beispielsweise Werkstofftyp, Schichtdicke, Durchmesser oder auch Aufbaurichtung berücksichtigt werden.
Das Selektive-Laser-Schmelzverfahren 24 stellt ein Schichtbauverfahren dar. Bei diesen kann es zu einem sogenannten Treppenstufeneffekt kommen. Dieser Effekt ist abhängig von der Orientierung des Formteils und seiner Dimension. Die Geometrieanpassung 15 gleicht auch Treppenstufeneffekte aus.
Die Korrekturgeometrie 19 ist sowohl orientierungsabhängig wie auch dimensionsabhängig. Insbesondere bei einer Bohrung als Zielgeometrie 17 wird die Korrekturgeometrie 19 durch eine Funktion beschrieben, welche abhängig vom Polarwinkel, vom Azimutwinkel und vom Durchmesser der Bohrung ist.

## Patentansprüche

1. Anpassungsverfahren (10) für ein Modellierverfahren (11), in dem anhand einer Zielgeometrie (17) eine von der Zielgeometrie (17) abgeleitete Modellgeometrie (12) für ein durch ein Selektives-Laser-Schmelzverfahren (24) zu erzeugendes Objekt erstellt wird, **dadurch gekennzeichnet, dass** aus der abgeleiteten Modellgeometrie (12) durch eine Dimensionsanpassung (13) mittels eines Korrekturfaktors (18) und/oder durch eine Geometrieanpassung (15) mittels einer Korrekturgeometrie (19) eine angepasste Modellgeometrie (16) erzeugt wird,
wobei aus einer Bohrung mit kreisförmigem Querschnitt als Zielgeometrie (17) eine Bohrung mit tropfenförmigem Querschnitt als angepasste Modellgeometrie (16) erzeugt wird.

2. Anpassungsverfahren (10) nach Anspruch 1,
wobei die Dimensionsanpassung (13) und/oder die Geometrieanpassung (15) in Abhängigkeit von der Orientierung der Zielgeometrie (17) im Raum vorgenommen wird.

3. Anpassungsverfahren (10) nach Anspruch 1 oder 2,
wobei die Dimensionsanpassung (13) und/oder die Geometrieanpassung (15) in Abhängigkeit von der Dimension der Zielgeometrie (17) vorgenommen wird.

4. Anpassungsverfahren (10) nach einem der Ansprüche 1 bis 3,
wobei die Dimensionsanpassung (13) und/oder die Geometrieanpassung (15) in Abhängigkeit von der Gestalt der Zielgeometrie (17) vorgenommen wird.

5. Herstellverfahren (23),
in dem anhand einer Zielgeometrie (17) in einem Modellierverfahren (11) eine von der Zielgeometrie (17) abgeleitete Modellgeometrie (12) erzeugt wird, anschließend in einem Anpassungsverfahren (10) nach einem der vorherigen Ansprüche aus der abgeleiteten Modellgeometrie (12) eine angepasste Modellgeometrie (16) erzeugt wird und aus der angepassten Modellgeometrie (16) in einem Selektiven-Laser-Schmelzverfahren (24) ein angepasstes Objekt (22) erzeugt wird.

6. Herstellverfahren (23) nach Anspruch 5,
wobei als angepasstes Objekt (22) eine einen Strömungskanal aufweisende Gasturbinenkomponente hergestellt wird.

## Claims

1. Adaptation method (10) for a modeling method (11), in which, with the aid of a target geometry (17), a model geometry (12) derived from the target geometry (17) is compiled for an object to be produced by a selective laser melting method (24), **characterized in that** an adapted model geometry (16) is produced from the derived model geometry (12) by dimensional adaptation (13) by means of a correction factor (18) and/or a geometrical adaptation (15) by means of a correction geometry (19),
a bore with a drop-shaped cross section being produced as an adapted model geometry (16) from a bore with a circular cross section as the target geometry (17).

2. Adaptation method (10) according to Claim 1,
wherein the dimensional adaptation (13) and/or the geometrical adaptation (15) is carried out as a function of the orientation of the target geometry (17) in space.

3. Adaptation method (10) according to Claim 1 or 2,
wherein the dimensional adaptation (13) and/or the geometrical adaptation (15) is carried out as a function of the dimension of the target geometry (17).

4. Adaptation method (10) according to one of Claims 1 to 3,
wherein the dimensional adaptation (13) and/or the geometrical adaptation (15) is carried out as a function of the configuration of the target geometry (17).

5. Production method (23),
in which, during a modeling method, with the aid of a target geometry (17), a model geometry (12) derived from the target geometry (17) is produced, an adapted model geometry (16) is subsequently produced in an adaptation method (10) according to one of the preceding claims from the derived model geometry (12), and an adapted object (22) is produced from the adapted model geometry (16) in a selective laser melting method (24).

6. Production method (23) according to Claim 5, wherein a gas turbine component having a flow channel is produced as the adapted object (22).

## Revendications

1. Procédé (10) d'adaptation pour un procédé (11) de modélisation, dans lequel on établit, à l'aide d'une géométrie (17) cible, une géométrie (12) modèle déduite de la géométrie (17) cible pour un objet à produire par un procédé (24) de fusion laser sélectif, **caractérisé en ce que**, à partir de la géométrie (12) modèle déduite, on produit, par une adaptation (13) des dimensions, au moyen d'un facteur (18) de correction et/ou par une adaptation (15) de géométrie, au moyen d'une géométrie (19) de correction, une géométrie (16) modèle adaptée,
dans lequel on produit, à partir d'un trou de section transversale circulaire comme géométrie (17) cible, un trou de section transversale en forme de goutte comme géométrie (16) modèle adaptée.

2. Procédé (10) d'adaptation suivant la revendication 1,
dans lequel on effectue l'adaptation (13) de dimension et/ou l'adaptation (15) de géométrie en fonction de l'orientation de la géométrie (17) cible dans l'espace.

3. Procédé (10) d'adaptation suivant la revendication 1 ou 2,
dans lequel on effectue l'adaptation (13) de dimension et/ou l'adaptation (15) de géométrie en fonction de la dimension de la géométrie (17) cible.

4. Procédé (10) d'adaptation suivant l'une des revendications 1 à 3,
dans lequel on effectue l'adaptation (13) de dimension et/ou l'adaptation (15) de géométrie en fonction de la conformation de la géométrie (17) cible.

5. Procédé (23) de fabrication,
dans lequel on produit, à l'aide d'une géométrie (17) cible, dans un procédé (11) de modélisation, une géométrie (12) modèle déduite de la géométrie (17) cible, ensuite, dans un procédé (10) d'adaptation suivant l'une des revendications précédentes, on produit, à partir de la géométrie (12) modèle déduite, une géométrie (16) modèle adaptée et, à partir de la géométrie (16) modèle adaptée, on produit un objet (22) adapté dans un procédé (24) de fusion laser sélectif.

6. Procédé (23) de fabrication suivant la revendication 5,
dans lequel on produit, comme objet (22) adapté, un élément de turbine à gaz ayant un conduit d'écoulement.
